Europäisches Patentamt
European Patent Office
Office européen des brevets

(19) (11) Publication number: 0 219 818 A2

(12) EUROPEAN PATENT APPLICATION

(21) Application number: 86114338.6

(22) Date of filing: 16.10.86

(51) Int. Cl.4: C08J 5/04 , C08K 7/02 , C08L 81/02

(30) Priority: 17.10.85 JP 231975/85

(43) Date of publication of application: 29.04.87 Bulletin 87/18

(84) Designated Contracting States: DE FR GB

(71) Applicant: KUREHA KAGAKU KOGYO KABUSHIKI KAISHA
9-11 Horidome-cho 1-chome Nihonbashi
Chuo-ku
Tokyo(JP)

(72) Inventor: Kouyama, Toshitaka
2-12, Nakaoka-Cho, 4-Chome
Iwaki-Shi Fukushima-Ken(JP)
Inventor: Kobayashi, Akio
3-39-3, Eguri, Nishiki-Machi
Iwaki-Shi Fukushima-Ken(JP)
Inventor: Iizuka, Yo
1-36-10, Iino, Chuodai
Iwaki-Shi Fukushima-Ken(JP)
Inventor: Shiiki, Zenya
28-1, Ochiai, Nishiki-Machi
Iwaki-Shi Fukushima-Ken(JP)

(74) Representative: Dr. Elisabeth Jung Dr. Jürgen Schirdewahn Dipl.-Ing. Claus Gernhardt
P.O. Box 40 14 68 Clemensstrasse 30
D-8000 München 40(DE)

# (54) Sheet products and production thereof.

(57) A sheet product made from a composition comprising 30 to 95% by weight of a polyarylenethioether resin having a substantially linear structure with a melt viscosity of 1,000 to 40,000 poise [temperature = 310°C, shearing rate = 200 $sec^{-1}$] and 5 to 70% by weight of a fibrous reinforcing material, which composition is formed substantially into the form of a sheet through the melting state of the resin. Because a polyarylenethioether having a substantially linear structure and a high molecular weight is used as the base material resin, the sheet of the present invention has excellent mechanical properties as compared with a sheet of the same composition formed by the use of a polyarylenethioether which is increased in molecular weight by crosslinking. Some processes for producing the sheet are also disclosed.



Xerox Copy Centre

# SHEET PRODUCTS AND PRODUCTION THEREOF

## BACKGROUND OF THE INVENTION

### Field of the Invention

This invention relates to sheet products or heat-set sheet products of excellent workability comprising a composition containing 30 to 95 wt.% of a substantially linear polyarylenethioether with a melt viscosity of l,000 to 40,000 poise and 5 to 70 wt.% of a fibrous reinforcing material and to processes for producing the same.

### Prior Art

In recent years, composite materials of,fibrous reinforcing materials and synthetic resins have been developed as substitute materials for metals in order to reduce the weight of metal construction materials for which corrosion resistance as well as heat resistance and mechanical strength are demanded as in aircrafts, automobiles, small ships, etc.

Most of such composite materials are prepreg sheets, etc., produced by the use of thermosetting resins, and therefore there has been a problem in that a long time is required for thermal modifying treatment (curing) during forming, whereby productivity has been low. Recently, a stampable sheet, requiring substantially no curing which comprises a thermoplastic resin reinforced with a fiber has begun to be developed. However, these materials generally employ polyolefins, polyamides, polyalkylene terephthalates which do not have high heat resistance as the base material resin, thus giving rise to a problem in that they cannot be used under high-temperature and corrosive conditions. Accordingly, there have been some attempts to use stampable sheets, etc., comprising polyparaphenylenethioethers which are thermoplastic resin having extremely excellent heat resistance and corrosion resistance reinforced with a fibrous reinforcing material (Australian Patent 8,429,0l6). However, the poly-p-phenylenethioether available in the prior art was one in which its apparent melt viscosity was increased by crosslinking a polymer with a relatively small molecular weight by curing, and therefore there is the problem of practically unsatisfactory mechanical characteristics such as impact strength, flexural strength, and tensile strength.

## SUMMARY OF THE INVENTION

We have undertaken extensive studies in order to solve these problems and consequently developed what we believe to be epoch-making processes for economically producing polyarylenethioethers having high molecular weights and linear structures with amply high, melt viscosities without crosslinking, as disclosed in Japanese Patent Applications Nos. l26725/l984, l34633/l984 or l88533/l984. The polyarylenethioether prepared according to such a process is substantially linear and also has a high molecular weight. Hence it has been found that a sheet product which can be satisfactorily used in practical application can be prepared by combining this polymer appropriately with a fibrous reinforcing material. Particularly, it has been found that a sheet product endowed with both excellent processability and mechanical properties can be prepared by the use of a copolymer of arylenethioethers, above all a block copolymer. The present invention has been accomplished on the basis of these findings.

More specifically, the sheet product according to the present invention is made from a composition comprising 30 to 95% by weight of a polyarylenethioether resin having a substantially linear structure with a melt viscosity of l,000 to 40,000 poise determined at a temperature = 3l0°C and a shearing rate of 200 $sec^{-1}$ and 5 to 70% by weight of a fibrous reinforcing material, which has been formed into substantially the form of a sheet through the melting state of the resin.

A process for producing the sheet article according to the present invention comprises melting a composition containing 30 to 50% by weight of a polyarylenethioether resin having a substantially linear structure with a melt viscosity of l,000 to 40,000 poise determined at a temperature of 3l0°C and a shearing rate of 200 $sec^{-1}$ and 5 to 70% by weight of a fibrous reinforcing material by heating the composition to the melting point of the resin employed or higher by the use of an extruder equipped with a T-die and extruding the melted composition into a sheet.

Another process for producing the sheet product according to the present invention comprises combining a slurry comprising 30 to 95% by weight of a powdery polyarylenethioether resin having a substantially linear structure with a melt viscosity of l,000 to 40,000 poise determined at a temperature of 3l0°C and a shearing rate of 200 $set^{-1}$ dispersed in a dispersing medium which is evaporatable with 5 to 70% by weight of a fibrous reinforcing material, removing the dispersing medium employed by squeezing or heating, and thereafter heating the thus produced resin-reinforcing material composition into substantially the form of a sheet to the melting point of the resin employed or higher temperature to melt the resin simultaneously with application of a pressure thereon.

Still another process for producing the sheet product according to the present invention comprises combining 30 to 95% by weight of a molten polyarylenethioether resin having a substantially linear structure with a melt viscosity of 1,000 to 40,000 poise determined at a temperature of 310°C and a shearing rate of 200 $sec^{-1}$ with 5 to 70% by weight of a mass of fibrous reinforcing material, and applying pressure on and forming the thus produced resin-reinforcing material composition into substantially the shape of a sheet at a temperature not lower than the melting point of the resin employed.

A further process for producing the sheet product according to the present invention comprises forming a preform comprising 30 to 95% by weight of a sheet of a polyarylenethioether resin having a substantially linear structure with a melt viscosity of 1,000 to 40,000 poise determined at a temperature of 310°C and a shearing rate of 200 $sec^{-1}$ and 5 to 70% by weight of a sheet comprising a fibrous reinforcing material in alternate layers, heating the laminated article to not lower than the melting point of the resin employed, and forming the same into substantially the shape of a sheet to melt the laminated product simultaneously with application of pressure thereon.

Since the sheet product of the present invention comprises a polyarylenethioether of high molecular weight which is substantially linear and a fibrous reinforcing material, a product of markedly excellent mechanical properties such as impact strength and flexural strength can be obtained as compared with a sheet product formed from a polyarylenethioether having a low molecular weight or an enhanced apparent melt viscosity by crosslinking a fibrous reinforcing material. Also the product is useful for automobile parts and electrical parts because of its great heat resistance and corrosion resistance.

Further, the formed sheet product obtained can be subjected to vacuum forming or compression forming, whereby more uniform and tough secondary formed products can be obtained as compared with low-molecular-weight polyarylenethioether sheet products.

## DETAILED DESCRIPTION OF THE INVENTION

### Forming Material

#### Base material resin

One characteristic feature of the present invention is that the resin component of the composition used for the sheet product is a polyarylenethioether resin which is substantially linear and has a high molecular weight (AT polymer).

Here, an AT polymer means a polymer having recurring units of $(-Ar-S-)_n$ (Ar: arylene group) as the main constituent.

Those having arylene groups comprising p-phenylene group or p-phenylene group as the main component are preferred in respect of physical properties such as heat resistance, formability and mechanical characteristics.

Examples of arylene groups other than p-phenylene group are m-phenylene group ( 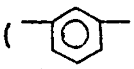 ), o-phenylene group ( 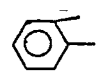 ), an alkyl-substituted phenylene group ( 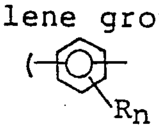 ) [R: alkyl group (preferably lower alkyl group), n is an integer of 1 to 4), p,p'-diphenylene-sulfone group ( 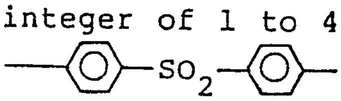 ), p,p'-biphenylene group ( 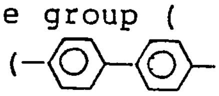 ), p,p'-diphenyleneether group ( 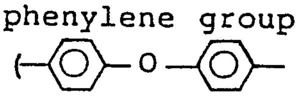 ), p,p'-diphenylene-carbonyl group ( 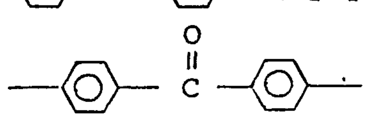 ), and naphthalene group ( 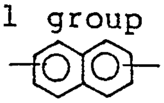 ).

With respect to forming of the composition into a sheet or workability of the sheet obtained in emboss working, etc., an AT copolymer containing different kinds of recurring units is more preferable

rather than the AT homopolymer containing only the 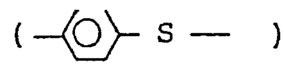 recurring units. As the copolymer, the copolymers of 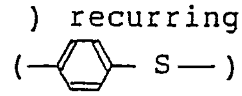 and 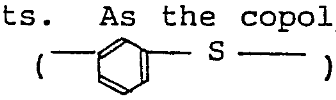 are preferred, particularly those containing these recurring units in blocks (for example, those described in Japanese Patent Application No. 134633/1984) rather than those containing these recurring units randomly. This is because remarkably better physical properties (heat resistance, mechanical properties, etc.) can be obtained by the use of a block copolymer as compared with the case with a random copolymer, although substantially equal effects may be obtained in both cases - (having a crystallization speed suitable for sheet working). The content of the recurring units

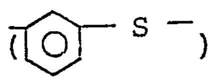

in the block copolymer should preferably be 5 to 50 mol%, particularly 10 to 25 mol%. The resin to be used as the base material resin for the sheet product of the present invention has the chemical structure as described above and is a substantially linear polyarylenethioether with a melt viscosity of 1,000 to 40,000 poise [temperature = 310°C, shearing rate = 200 $sec^{-1}$], particularly preferably 3,000 to 20,000 poise. With a polymer having a low melt viscosity less than 1,000 poise, drawdown is liable to occur during processing, and also the mechanical properties obtained are poor. On the other hand, with a polymer having a high melt viscosity in excess of 40,000 poise, the flow characteristic becomes poor, whereby adhesion to a fibrous reinforcing material is worsened, microvoids are more frequently contained in the sheet, or its mechanical properties are impaired. Further, the AT polymer to be used in the present invention should preferably have a substantially linear structure. For example, a crosslinked product obtained by the use of 0.5 mols or more of a crosslinking agent - (e.g., 1,2,4trihalobenzene) por 100 mols of arylene groups during polymerization or a crosslinked product increased in melt viscosity by 2-fold or more in appearance by crosslinking the polymer by high temperature treatment in the presence of $O_2$,. etc., is not preferable for the present invention. These crosslinked products are generally mechanically very fragile and are undesirable with respect to physical properties. Besides, a sheet using these as the base material resin has poor elongation, and it is difficult to carry out deep draw processing thereof. Thus, they are also undesirable with respect to processability.

The linear polyarylenethioether satisfying the conditions of the resin of the present invention as described above can be produced economically according to the method described in, for example, the pending Japanese Patent Application No. 126725/1984 by the present inventors. The process of the Japanese Patent Application No. 126725/1984 is a process for producing a polyarylenesulfide having a melt viscosity of 1,000 poise or higher - (melt viscosity is measured at 310°C and at a shearing rate of 200 $sec^{-1}$), which comprises carrying out the reaction between an alkali metal sulfide and a dihaloaromatic compound in an organic amide solvent, to obtain a polyarylenesulfide, wherein the reaction is carried out in at least the following two steps:

(1) the step of carrying out the reaction at a temperature of 180 to 235°C under the state in which 0.5 to 2.4 mols of water is present per one mol of the alkali metal sulfide to form a polyarylenesulfide having a melt viscosity of 5 to 300 poise at a conversion of the dihaloaromatic compound of 50 to 98 mol%, and

(2) the step of continuing the above reaction by adding water so that 2.5 to 7.0 mols of water will be present per 1 mol of the alkali metal sulfide and also elevating the temperature to 245 ~ 290°C.

The base material resin should be preferably contained in the composition at a proportion of 30 to 95 wt.%, particularly 40 to 80 wt.%. With a content less than 30 wt.%, the strength becomes weaker because the fibrous reinforcing material can be easily bound firmly. On the other hand, with a content over 95 wt.%, the composite effect in improvement of mechanical properties when fibrous

reinforcing material is uniformly dispersed cannot be exhibited fully.

Fibrous reinforcing material

The fibrous reinforcing material to be used in the fiber-reinforced sheet product of the present invention is preferably made of inorganic materials, e.g., inorganic fibers such as carbonaceous fibers, glass fibers, silica fibers, alumina fibers, ceramic fibers, rock wool, pottasium titanate whisker, and fibrous metals, or organic fibers such as Aramide fibers. Among them, carbonaceous fibers, glass fibers and Aramide fibers are particularly preferred from the standpoint of heat resistance, mechanical strength and economy.

For the fibrous reinforcing material, various forms such as cloth, mat, felt, paper, roving, chopped fiber, middle fiber, and whisker, can be used.

The amount of the fibrous reinforcing material mixed in the composition sheet of the present invention should be within the range of from 5 to 70 wt.%, particularly from 20 to 60 wt.% in the composition.

Other particulars

The composition of the present invention comprises the base material resin of AT polymer and a fibrous reinforcing material as the essential components, but it is also possible to add inorganic fillers, other thermoplastic resins, various additives, etc., within limits which will not cause inconvenience in forming. Inorganic fillers may be added in powder form or fine particles for improvement of dimensional stability, heat distortion temperature, flame retardancy, mechanical strength, hardness, etc., or for reduction in cost. For example, calcium carbonate, calcium silicate, calcium sulfate, talc, silica, mica, $TiO_2$, carbonaceous materials (including carbon black, graphite), alumina, silica alumina, glass, iron oxide, gypsum, sand, cement or various metals can be used. The amount added is preferably 0 to 50 wt.%. At a level exceeding 50%, the processability of the composition sheet will be undesirably impaired.

Also, for improvement of lubricating property or impact resistance or reduction in cost, other thermoplastic resins can also be mixed in the composition, if desired. Examples of thermoplastic resins are fluorine resin, polyalkylene terephthalate, polyolefin, polycarbonate, polyphenyleneether, polyamide, silicone, ABS resin, polyether-ether ketone, polysulfone, and polyether sulfone as preferable ones, since they can be kneaded without decomposition or change. The amount to be mixed is preferably 0 to 40 wt.%. If it exceeds 40%, the advantageous features inherent in the base material resin such as heat resistance, flame retardancy and easy processability will be undesirably affected.

Further, for the purpose of improvement of color tone, heat stability, weathering resistance, and workability, rust prevention, lubricity improvement, crystallinity control, coloration, etc., it is also possible to add salts, hydroxides, oxides or hydrocarbyl oxides of the metals of the group IA, group IIA or the group IIB of the periodic table, stabilizers, lubricants, mold release agents, pigments, nucleators, etc., as necessary.

The composition comprising the components as described above can be used as a powdery mixture directly for the starting material of the sheet product, or alternatively it can be formed once into composition pellets before they are used for melt forming as the starting material of the sheet product.

Forming into sheet

The sheet article can be obtained according to various forming methods from the composition by the use of the AT polymer as the base material resin of the present invention. Among them, the sheet products obtained according to the following forming methods are preferred for excellent physical properties as well as excellent processability: I forming according to the melt extrusion method; 2 forming according to the slurry method; 3 forming according to the gel coating method; and 4 forming according to the laminating method. In the present invention "sheet product" refers to a sheet having a thickness of the order of 0.2 to 5 mm.

The contents of these sheets are as follows.

I Sheet product according to the melt extrusion method:

This is obtained according to the method inwhich the base material resin or the base material resin composition and the fibrous reinforcing material are melted and mixed in an extruder, and the resulting mixture is extruded into a sheet. In the case when the fibrous reinforcing material has a short form such as chopped or milled fiber, or whisker, the mixture of the fibrous reinforcing material with the base material resin or the base material resin composition (powder or pellet) is preferably melted by heating to be extruded into a sheet while being fed through a hopper into an extruder equipped with a T-die. In the case when the fibrous reinforcing material has a lengthy form

such as roving, cloth, or mat, it is preferable to use an extruder equipped with a vent and to extrude the mixture melted by heating into a sheet while the basic material resin or the basic material resin composition is fed through a hopper and the fibrous reinforcing material is fed through the vent hole continuously into the extruder.

**2** Sheet forming according to the slurry method:

A sheet product having excellent properties can be obtained by combining a slurry of the base material resin or the base material resin composition dispersed in a dispersing medium with a fibrous reinforcing material, for example, impregnation into a mass of reinforcing material or spraying onto a mass of reinforcing material or individual fibers, then removing said dispersing medium to thereby cause the base material resin or the base material resin composition to adhere uniformly onto said fibrous reinforcing material, and melting the thus produced resin-reinforcing material composition in the form of a sheet by heating to a temperature not lower than the melting point of the resin employed simultaneously with application of pressure.

The base material resin or the base material resin composition is preferably in the form of a fine powder for making readily a uniform slurry. As the dispersing medium of the slurry, at least one solvent such as water, alcohol, ketone, ether, aliphatic hydrocarbon, halogenated hydrocarbon, and amide can be used. For facility in handling and economy, water, alcohol or ketone is particularly preferred. For stabilization of the slurry, a small amount of a surfactant or a suspending agent can also be added.

When the fibrous reinforcing material is short such as chopped or milled fiber, or whisker, a preferable procedure is as follows. A mass of these reinforcing materials is impregnated with the slurry, and after removal of the dispersing medium by squeezing or heating, the mass is laminated to a thickness corresponding to the desired dimension. Then, the base material resin is melted by heating and pressed into a sheet.

When the sheet of the fibrous reinforcing material is lengthy such as cloth, mat, paper, or roving, a preferable procedure is as follows. While the fibrous reinforcing material is fed continuously or batchwise at a thickness corresponding to the desired dimension, it is dipped in a slurry of the base material resin or its composition, or alternatively said slurry is sprayed onto the mass of fibrous reinforcing material, and, after removal of the dispersing medium by squeezing or heating, the base material resin is melted by heating and forming by pressing into sheet.

**3** Sheet forming according to the gel coating method:

A sheet product having excellent properties can be obtained by coating or impregnating a mass of fibrous reinforcing material with a melted base material resin or the base material resin composition and subsequently pressing the resin-reinforcing material composition into the shape of a sheet.

This forming method is preferable for a long fibrous reinforcing material. That is, a preferable procedure comprises feeding continuously or batchwise a fibrous reinforcing material in the shape of a sheet, while melt extruding on the other hand the base material resin or its composition through the die of an extruder to thereby coat or impregnate the fibrous reinforcing material mass with the extrudate, and applying pressure on the coated or impregnated mass to form a sheet.

**4** Sheet forming according to the laminating method:

A sheet product can be obtained by forming a preform comprising a sheet of the base material resin or the base material resin composition in the molten or solidified state and a sheet comprising a fibrous reinforcing material in alternate layers and then pressing or melt pressing the preform. This method is suitable when a planar fibrous reinforcing material such as roving cloth or mat is used.

This method is preferably practiced as follows. First, the base material resin or the base material resin composition is extruded into a sheet by means of an extruder equipped with a T-die or the like. Immediately after extrusion or after cooling, the fibrous reinforcing material is laminated and, with optional heating to the melting point of the resin or higher temperature, the base material resin is pressed to form a sheet.

As the construction of the sheet formed according to the laminating method, not only the sheet of AT resin or AT resin composition but also a laminated product with a sheet of another resin or resin composition can also be used.

The formed sheet of the present invention is characterized by great flexural strength and impact strength as well as high heat distortion temperature (HDT). The flexural strength obtained according to the measuring method according to ASTM D-790 is generally 20 $Kg/cm^2$ or higher; the impact strength obtained according to the measuring method according to ASTM D-256 is 30 Kg cm/cm or higher, preferably 40 Kg cm/cm or higher; and HDT is

180°C or higher, preferably 230°C or higher.

Processing of sheet article

The sheet article of the present invention can be subjected to processing into articles of various shapes according to **1** the high temperature vacuum forming method, **2** the high temperature compression forming method, **3** the mandrel method, etc.

**1** High temperature vacuum forming method:

One or several composition sheets of the present invention, optionally that laminated with a sheet made of a fibrous Reinforcing material, can be heated to a temperature within the range from the softening point to the decomposition initiation temperature of the base material resin, particularly preferably from 80°C to 380°C and forced in close contact against a mold under evacuation by the use of a vacuum mold, whereby it can be formed into any desired shape.

This molding can be further subjected to heat treatment at a temperature slightly lower than its heat distortion temperature, if necessary, whereby the heat distortion temperature of the molding can be further improved [PLASTIC ENGINEERING HANDBOOK, third edition, page 48 (1960)].

**2** High temperature compression molding:

By bringing the sheet into close contact against a mold by the use of a compression mold in place of the vacuum mold and a high pressure in place of a vacuum in the vacuum molding method, it can be formed into a desired shape. As compared with the vacuum molding method, the compression molding method is more advantageous on several points such that a molding with little voids or defects can be obtained with ease, that a thick molding can be formed, and that deep forming can be done.

**3** Mandrel method:

With the use of a mandrel in place of vacuum mold or compression mold, one or several composition sheets of the present invention, optionally laminated with a fibrous reinforcing material (particularly cloth, mat, paper, etc.), is wound around a mandrel heated to a temperature within the range of from the softening temperature to the decomposition temperature of the resin employed and pressed by use of a mold and, after cooling, the mandrel is taken up, whereby it can be formed into a tubular product. This method is suitable for forming of pipes and tubes.

Heat setting of sheet products or articles

The sheet product and the sheet article thereof are preferably heat-set when heat resistance and mechanical properties are further required. Heat setting is carried out by maintaining the product or article at a temperature of 150 to 260°C for 0.3 to 100 hours. At a temperature lower than 150°C, it takes a long time for heat setting which is disadvantageous in productivity. On the other hand, at a temperature over 260°C, the resin may undesirably melt. With a time shorter than 0.3 hour, heat setting is insufficient, while a time over 100 hours is disadvantageous in productivity.

Heating can be carried out in air or in a non-oxidative atmosphere.

Use of the sheet products or articles

The sheet products or articles made from the composition according to the present invention are applicable widely for, for example, floor materials, wall materials, tanks and housing of automobiles, vehicles or aircrafts, materials for housing, electronic and electrical instruments, wiring boards, range parts, bobbins, etc., or for various pipes and tubes for industry.

EXPERIMENTAL EXAMPLES

Synthesis Example 1

An autoclave was charged with 1,400 kg of N-methylpyrrolidone (abbreviated as NMP), 1.5 kmols of $Na_2S \cdot 3H_2O$ and 3 kmols of CaO to carry out the reaction for eliminating crystal water with CaO by heating at 160°C for 2 hours, then charged with 110 kg of NMP and 1.51 kmols of p-dichlorobenzene (abbreviated as p-DCB), and polymerization was carried out at 205°C for 7 hours to obtain a poly-p-phenylenethioether ($L_1$). The melt viscosity of $L_1$ (temperature = 310°C, shearing rate = 200 $sec^{-1}$) was found to be 300 poise.

A mixture of 16.2 kg of $L_1$, 180 kg of NMP and 30 kg of water was stirred in an autoclave. 400 g of $C_2H_5ONa$ was further charged into the autoclave, and reaction was carried out at 265°C for 3 hours to obtain a poly-p-phenylenethioether $L_2$. The melt viscosity of $L_2$ was found to be 18,000 poise.

A part of $L_1$ was subjected to heat treatment in a hot air dryer at 265°C for 3 hours to obtain a

crosslinked poly-p-phenylenethioether $C_1$. The melt viscosity of $C_1$ was found to be 4,100 poise.

Synthesis Example 2

An autoclave was charged with 110 kg of NMP and 250 mols of $Na_2S \cdot 5H_2O$, and the temperature was elevated to about 200°C to distill out crystal water. Then 33 kg of NMP and 250 mols of p-DCB were added to the mixture to carry out polymerization at 220°C for 6 hours. Subsequently, 600 mols of water was added, and the temperature was elevated to 260°C to carry out polymerization for 4 hours to produce a poly-p-phenylenethioether $L_3$. The melt viscosity of $L_3$ was found to be 4,000 poise.

Synthesis Example 3

Polymerization was carried out in the same manner as in Synthesis Example 2 except that polymerization was carried out at a temperature of 260°C for 15 hours by the use of 210 mols of p-DCB and 40 mols of m-dichlorobenzene - (abbreviated as m-DCB) in place of 250 mols of p-DCB to obtain a random copolymer of (p-phenylenethioether/m-phenylenethioether) $R_1$. The melt viscosity of $R_1$ obtained was found to be 3,800 poise, and the composition ratio of (p-phenylenethioether/m-phenylenethioether) to be (87 mols/13 mols).

Synthesis Example 4

An autoclave was charged with 110 kg of NMP and 200 mols of $Na_2S \cdot 5H_2O$, and the temperature was elevated to 205°C to distill out crystal water. Subsequently, 33 kg of NMP and 200 mols of m-DCB were charged, and polymerization was carried out at 230°C for 8 hours to prepare a reaction mixture A. Separately, another autoclave was charged with 620 kg of NMP and 1.11 kmols of $Na_2S \cdot 5H_2O$, and about 7/10 of the crystal water was distilled out by elevating the mixture to about 205°C to prepare a mixture B. To this mixture was added the above reaction mixture A, which step was followed further by addition of 170 kg of NMP and 1.11 kmols of p-DCB, and the reaction was carried out at 220°C for 10 hours. Then polymerization was carried out with addition of 3.5 kmols of water at 255°C for 6 hours. Polymerization was repeated four times according to the same method. The melt viscosity of the block copolymer of (p-phenylenethioether/m-phenylenethioether) $B_1$ was found to be 4,100 poise, and the composition ratio of (p-phenylenethioether/m-phenylenethioether) to be (84 mols/16 mols).

Synthesis Example 5

The reaction mixture A and the mixture B were prepared in the same manner as in Synthetic example 4, and polymerization was carried out in the same manner as in Synthetic example 4 except for adding 1/3 of the reaction mixture A to the mixture B to obtain a block copolymer $B_2$. The melt viscosity of $B_2$ was found to be 5,100 poise, and the composition ratio of (p-phenylenethioether/m-phenylenethioether) to be (94 mols/6 mols).

Examples 1 to 5, Comparative Examples 1 and 2

Each of the AT polymers $L_1$, $L_2$, $L_3$, $R_1$, $B_1$, $B_2$ and $C_1$ was fed continuously through a hopper into an extruder equipped with a vent and melted by heating to 350°C whle glass chopped glass fiber - [CS3PE-471S, produced by Nittobo K.K.] was fed continuously at a constant feeding rate from the venthole positioned ahead of the melted portion, and the resultant mixture was melt extruded into a sheet of a thickness of 2 mm from a T-die connected to the tip end of the extruder. The sheet was immediately cooled with water and then thermally fixed by maintaining the sheet obtained at 205°C for 4 hours. Formed sheets ($L_1$-$S_1$-I), ($L_2$-$S_1$-I), ($L_3$-$S_1$-I), ($R_1$-$S_1$-I), ($B_1$-$S_1$-I), ($B_2$-$S_1$-I) and ($C_1$-$S_1$-I) were obtained.

The physical properties of the sheets obtained are shown in Table 1. The sheets of ($L_1$-$S_1$-I) and - ($C_1$-$S_1$-I) prepared by using $L_1$ with a low melt viscosity (low molecular weight, and $C_1$ of the crosslinked type as the materials [Comparative Examples 1 and 2] were found to have insufficient strengths. The sheet molding ($R_1$-$S_1$-I) obtained by use of a random copolymer $R_1$ as the material was found to have sufficient strength, but its heat resistance was slightly insufficient.

Examples 6 and 7

The AT polymer ($B_1$) was blended with chopped carbonaceous fiber [C-101F, produced by Kureha Kagaku K.K.] and an Aramide fiber staple - [Cornex, produced by Teijin K.K.], respectively. Each composition was extruded into pellets through an extruder, and the respective pellets were fed into an extruder equipped with a T-die, melt extruded into a sheet through the T-die at 350°C, and quenched with water to obtain a formed sheet with a thickness of 2 mm. The sheet was then thermally

fixed by holding the sheet at 205°C for 4 hours to obtain ($B_1$-$S_1$-2) and ($B_1$-$S_1$-3), respectively.

The physical properties of the formed sheets obtained are also shown in Table I.

Examples 8 and 9

AT polymers ($L_3$) and ($B_1$) were each finely pulverized into powder of I50 μ or less by means of a pulverizer, and each powder was dispersed to a concentration of 20 wt.% in an aqueous solution with a water/acetone ratio of 70 (wt.)/30 (wt.) to prepare respective slurries. These slurries were each impregnated into a glass chopped strand mat [MC600A, produced by Nittobo K.K.], then squeezed and heated in hot air to remove the dispersing medium. The same operation was repeated until the fiber content became approximately 30 wt.%.

The AT polymer-impregnated mats were laminated alternately, pressed by melting under a pressure of 200 kg/cm² and at 350°C for I0 minutes, then quenched with water to obtain a sheet with a thickness of 2 mm, which was then thermally fixed by holding the sheet at 205°C for 4 hours. Thus, -($L_3$-$S_2$-I) and ($B_1$-$S_2$-I) were prepared.

The physical properties of the sheets obtained are shown in Table 2.

Examples I0 and II

While the AT polymers ($L_3$) and ($B_1$) were melt extruded by means of an extruder equipped with a cross-head die, a glass roving [RS240PE-535, produced by Nittobo K.K.] was gel-coated with each of the polymers at the cross-head die and immediately cooled with water to prepare a polymer-coated roving. The polymer-coated roving was cut, and the operation of laminating one layer in one direction and the next layer in the direction perpendicular thereto was repeated to make a laminated product with fiber orientation in two directions, which was then subjected to melt pressing by a hot press under a pressure of 200 kg/cm² and a temperature of 350°C for 10 minutes to obtain a formed sheet with a thickness of 2 mm, which was then thermally fixed by holding the sheet at 205°C for 4 hours. Thus, ($L_3$-$S_3$-I) and ($B_1$-$S_3$-I) were obtained.

The physical properties of the sheets obtained are shown in Table 2.

Examples I2 and I3

AT polymers ($L_3$) and ($B_1$) were each fed into an extruder equipped with a T-die, extruded into a sheet by melting by heati.ng to 350°C and then cooled with water to prepare a polymer sheet having a thickness of approximately 0.I0 mm.

A glass cloth [WF230N-I00, produced by Nittobo K.K.] was sandwiched between the sheets and pressed by melting under a pressure of 20 kg/cm² and a temperature of 350°C for I0 minutes to obtain a composite sheet with a fiber content of 4I wt.% and a thickness of 0.3 mm, which was then thermally fixed under the conditions of 205°C/4 hours. Thus, ($L_3$-$S_4$-I) and ($B_1$-$S_4$-I) were obtained.

Table 1

| | Comp. Exam. 1 | Example 1 | Example 2 | Example 3 | Example 4 | Example 5 | Comp. Exam. 2 | Example 6 | Example 7 |
|---|---|---|---|---|---|---|---|---|---|
| Sheet No. | $L_1$-$S_1$-1 | $L_2$-$S_1$-1 | $L_3$-$S_1$-1 | $R_1$-$S_1$-1 | $B_1$-$S_1$-1 | $B_2$-$S_1$-1 | $C_1$-$S_1$-1 | $B_1$-$S_1$-2 | $B_1$-$S_1$-3 |
| Fiber | | | | | | | | | |
| Component | GF | GF | GF | GF | GF | GF | GF | Carbonaceous | Aramide |
| Form | Chop | Chop | Chop | Chop | Chop | Chop | Chop | Chop | Staple |
| Weight (%) | 32 | 30 | 29 | 33 | 30 | 28 | 32 | 18 | 15 |
| Sheet properties *1 | | | | | | | | | |
| Flexural strength*2 (kg/mm$^2$) | 12 | 23 | 23 | 20 | 25 | 27 | 16 | 21 | 20 |
| Impact strength*3 (no notch) (kg cm/cm) | 15 | 59 | 52 | 56 | 55 | 69 | 19 | 48 | 63 |
| HDT*4 (°C) | >260 | >260 | >260 | >180 | >260 | >260 | >260 | >260 | >260 |

*1 Sample: thermal fixing 205°C/4 hours
*2 ASTM D-790
*3 ASTM D-256
*4 Heat distortion temperature. ASTM D-648
*5 Glass fiber

Table 2

| | Example 8 | Example 9 | Example 10 | Example 11 |
|---|---|---|---|---|
| Sheet No. | $L_3$-$S_2$-1 | $B_1$-$S_2$-1 | $L_3$-$S_3$-1 | $B_1$-$S_3$-1 |
| Fiber<br>Component<br>Form<br>Weight (%) | <br>GF<br>Chop<br>32 | <br>GF<br>Chop<br>30 | <br>GF<br>Roving<br>28 | <br>GF<br>Roving<br>26 |
| Sheet properties*1<br>Flexural strength*2 (kg/mm$^2$)<br>Impact strength*3 (no notch) (kg·cm/cm)<br>HDT (°C) | <br>27<br>50<br>>260 | <br>29<br>55<br>>260 | <br>140<br>>200<br>>260 | <br>180<br>>200<br>>260 |

*1 Sample: thermal fixing 205°C/4 hours
*2 ASTM D-790
*3 ASTM D-256
*4 ASTM D-648

<u>Examples 14 and 15, Comparative Examples 3 and 4</u>

Each of the sheets ($L_1$-$S_1$-1), ($L_2$-$S_1$-1), ($B_1$-$S_1$-1) and ($C_1$-$S_1$-1) was preheated at 290°C, fed into a pair of male and female molds at 135°C, and subjected to a pressure of about 90 kg/cm$^2$ to prepare

a square tray-shaped molding measuring 100 mm $\times$ 100 mm $\times$ 15 mm.

The tray prepared from ($L_1$-$S_1$-I) was found to be remarkably thin at the top portion and the ridge portion. The other products were found to have substantially uniform thicknesses. The products from ($L_1$-$S_1$-I) and ($C_1$-$S_1$-I) (Comparative Examples 3 and 4) were very brittle and were broken under a small stress.

<u>Example 16, Comparative Example 5</u>

Each of the sheets ($L_3$-$S_4$-I) and ($B_1$-$S_4$-I) obtained in Examples 12 and 13 was pre-heated at 290°C, wound up on a mandrel, then placed in a cylindrical mold at 135°C to be molded therein into a cylinder under a pressure of about 30 kg/cm$^2$, and, after cooling, the mandrel was taken up to mold a pipe having an inner diameter of 30 mm Φ and a thickness of about 2 mm.

The pipe from ($L_3$-$S_4$-I) was found to have conspicuous voids, while the pipe from ($B_1$-$S_4$-I) was found to be dense in appearance.

## Claims

1. A sheet product made from a composition comprising 30 to 95% by weight of a polyarylenethioether resin having a substantially linear structure with a melt viscosity of 1,000 to 40,000 poise determined at a temperature of 310°C and a shearing rate of 200 sec$^{-1}$ and 5 to 70% by weight of a fibrous reinforcing material, which composition has been formed substantially into the form of a sheet through the melting state of the resin.

2. A sheet product according to claim 1, which has been heat set.

3. A sheet product according to claim 1 or claim 2, wherein the polyarylenethioether resin is substantially a linear poly-p-phenylenethioether.

4. A sheet product according to claim 1 or claim 2, wherein the polyarylenethioether resin comprises a polyarylenethioether copolymer, at least a part of said polyarylenethioether copolymer being a block copolymer comprising 50 to 95 mol% of a block consisting of recurring units

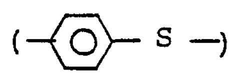

and 5 to 50 mol% of a block consisting of recurring units

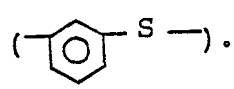

5. A sheet product according to any one of claims 1, 2 and 3, wherein the fibrous reinforcing material is one species of fiber selected from glass fibers, carbonaceous fibers and Aramide fibers.

6. A sheet product according to any one of claims 1 to 5, which has been formed at the softening temperature of the resin employed or higher temperature into a three-dimensional shape.

7. A sheet product according to any one of claims 1 to 5, which has been rolled into the shape of a tube and bonded at the portion between the contacted layers.

8. A process for producing a sheet product which comprises melting a composition containing 30 to 50% by weight of a polyarylenethioether resin having a substantially linear structure with a melt viscosity of 1,000 to 40,000 poise determined at a temperature of 310°C and a shearing rate of 200 sec$^{-1}$ and 5 to 70% by weight of a fibrous reinforcing material by heating the composition to the melting point of the resin employed or higher temperature by means of an extruder equipped with a T-die and extruding the melted composition into a sheet.

9. A process for producing a sheet product which comprises combining a slurry comprising 30 to 95% by weight of a powdery polyarylenethioether resin having a substantially linear structure with a melt viscosity of 1,000 to 40,000 poise determined at a temperature of 310°C and a shearing rate of 200 sec$^{-1}$ dispersed in a dispersing medium which is evaporatable with 5 to 70% by weight of a fibrous reinforcing material, removing the dispersing medium employed by squeezing or heating, and thereafter heating the thus produced resin-reinforcing material composition substantially in the form of a sheet to the melting point of the resin employed or higher temperature to melt the resin simultaneously with application of a pressure thereon.

10. A process for producing a sheet product which comprises combining 30 to 95% by weight of a molten polyarylenethioehter resin having a substantially linear structure with a melt viscosity of 1,000 to 40,000 poise determined at a temperature of 310°C and a shearing rate of 200 $sec^{-1}$ with 5 to 70% by weight of a mass of fibrous reinforcing material and applying a pressure on the thus produced resin-reinforcing material composition substantially in the form of a sheet at a temperature not lower than the melting point of the resin employed.

11. A process for producing a sheet product which comprises forming a preform comprising 30 to 95% by weight of a sheet of a polyarylenethioether resin having a substantially linear structure with a melt viscosity of 1,000 to 40,000 poise determined at a temperature of 310°C and a shearing rate of 200 $sec^{-1}$ and 5 to 70% by weight of a sheet comprising a fibrous reinforcing material in alternate layers and heating the preform to a temperature not lower than the melting point of the resin employed substantially in the form of a sheet to melt the laminated product simultaneously with application of a pressure thereon.